# EUROPÄISCHE PATENTSCHRIFT

(11) **EP 2 028 710 B1**
(45) Veröffentlichungstag und Bekanntmachung des Hinweises auf die Patenterteilung: **07.12.2011**
(21) Anmeldenummer: 08162156.7
(22) Anmeldetag: 11.08.2008
(51) Int. Cl.: H01M 6/06, B01D 53/86, H01M 8/10, H01M 8/12, H01M 8/04

(54) **Kraftfahrzeug mit einer Brennkraftmaschine und einem Brennstoffzellensystem**
Vehicle with a combustion engine and a fuel cell system
Véhicule avec un moteur à combustion et un système de cellules combustibles

(30) Priorität: 18.08.2007 DE 102007039082
(43) Veröffentlichungstag der Anmeldung: 25.02.2009
(73) Patentinhaber: J. Eberspächer GmbH & Co. KG, 73730 Esslingen (DE)
(72) Erfinder: Kaupert, Andreas, 73730 Esslingen (DE)
(74) Vertreter: BRP Renaud & Partner

(56) Entgegenhaltungen:
- WO-A-01/42713
- WO-A-2004/061278
- WO-A-2004/108256
- WO-A-2005/005027
- WO-A-2005/108289
- DE-A1- 10 219 799
- DE-A1- 10 318 865

## Beschreibung

Die vorliegende Erfindung betrifft ein Kraftfahrzeug mit einer Brennkraftmaschine und einem Brennstoffzellensystem.

Ein Brennstoffzellensystem kann bei einem Kraftfahrzeug mit Brennkraftmaschine als alleinige oder als zusätzliche Stromversorgungseinheit zur Anwendung kommen. Mit einem derartigen Brennstoffzellensystem kann insbesondere auch bei ausgeschalteter Brennkraftmaschine hinreichend elektrische Energie generiert werden, um bestimmte oder sämtliche elektrische Verbraucher des Fahrzeugs zu versorgen.

Aus der WO 2005/108289 A ist es bekannt, konventionellen Kraftstoff, der aus fossilen Energieträgern gewonnen wird, durch einen künstlich hergestellten Kraftstoff zu ersetzen, der aus einer Kombination von Wasser und darin gelösten Guanidine besteht. Exemplarisch werden dabei zwei unterschiedlichen Anwendungsmöglichkeiten zur Verwendung dieses künstlichen Kraftstoffs näher erläutert. Zum Einen lässt sich dieser Kraftstoff in einem Brennstoffzellensystem verwenden. Zum Anderen lässt sich der Kraftstoff in einer Brennkraftmaschine verwenden. Sowohl das Brennstoffzellensystem als auch die Brennkraftmaschine kann zur Abgasreinigung mit einer Abgasanlage ausgestattet sein, die verschiedene Abgasbehandlungskomponenten umfassen kann.

Aus der DE 102 19 799 A1 ist eine Brennkraftmaschine mit Abgasanlage bekannt, wobei außerdem ein Brennstoffzellensystem vorgesehen ist, dessen Abgase in die Abgasanlage der Brennkraftmaschine eingeleitet werden.

Weitere Anlagen dieser Art sind beispielsweise aus der WO 2004/108256 A1 und aus der WO 2005/005027 A1 bekannt.

Die vorliegende Erfindung beschäftigt sich mit dem Problem, für ein Kraftfahrzeug der eingangs genannten Art eine verbesserte Ausführungsform anzugeben, die sich insbesondere durch reduzierte Schadstoffemissionen auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in einer Abgasanlage des Brennstoffzellensystems einen SCR-Katalysator anzuordnen, in dem Stickoxide mittels Ammoniak zu Stickstoff und Wasser umsetzbar sind. Für die Abgasanlagen von Brennkraftmaschinen, insbesondere von Dieselmotoren, sind derartige SCR-Katalysatoren an sich bekannt. Erfindungsgemäß wird diese Technologie nun bei der Behandlung der Abgase des Brennstoffzellensystems eingesetzt. Entscheidend ist hierbei, dass das Brennstoffzellensystem eine von der Abgasanlage der Brennkraftmaschine unabhängige, eigene Abgasanlage aufweist, die einen eigenen, auf die Bedürfnisse des Brennstoffzellensystems adaptierten SCR-Katalysator enthält.

Das Brennstoffzellensystem umfasst einen Reformer zum Generieren von Reformatgas, das der Brennstoffzelle als Anodengas zuführbar ist. Gemäß einer besonders vorteilhaften Ausführungsform kann das Brennstoffzellensystem mit einer Reformateinleiteinrichtung ausgestattet sein, mit deren Hilfe Reformatgas in die Abgasanlage einleitbar ist. Mit Hilfe dieses Reformatgases lässt sich beispielsweise eine Regeneration des SCR-Katalysators durchführen. Ebenso kann das Reformatgas zur Regeneration eines NOₓ-Speichers verwendet werden. Des weiteren lässt sich das Reformatgas auch zur gezielten Temperatursteigerung im Abgas beziehungsweise in der Abgasanlage nutzen, beispielsweise um bei einem Partikelfilter die Regeneration durch Rußabbrand zu initiieren oder um einen NOₓ-Speicher oder einen SCR-Katalysator auf Betriebstemperatur zu bringen.

Des weiteren kann die Reformatgaseinleitung in Verbindung mit einem NOₓ-Speicher auch zur Generierung von Ammoniak genutzt werden, ohne dass hierzu externe Zusatzstoffe erforderlich sind. Eine derartige on-board-Erzeugung von Ammoniak kommt somit ohne Vorratsbehälter und Einspritzsysteme für Harnstoff beziehungsweise wässrige Harnstofflösung oder Ammoniak aus. Zur Generierung von Ammoniak kann außerdem ein Oxidationskatalysator, insbesondere ein Drei-Wege-Katalysator, verwendet werden, der die aus dem NOₓ-Speicher desorbierten Stickoxide zusammen mit Wasserstoff zu Ammoniak und Wasser umsetzt. Um diesen Regenerationsvorgang während des normalen Betriebs der Brennstoffzelle besonders einfach realisieren zu können, kann außerdem ein Bypass vorgesehen sein, der den NOₓ-Speicher und gegebenenfalls den nachgeordneten Oxidationskatalysator umgeht. Hierdurch können die sauerstoffhaltigen Abgase des Brennstoffzellensystems unter Umgehung des NOₓ-Speichers und gegebenenfalls des nachgeordneten Oxidationskatalysators direkt dem SCR-Katalysator zugeführt werden. Gleichzeitig erhält der SCR-Katalysator im Regenerationsbetrieb das dabei erzeugte Ammoniak.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzip- darstellung eines Brennstoffzellensystems,
- Fig. 2: eine Ansicht wie in Fig. 1, jedoch bei einer anderen Ausführungsform.

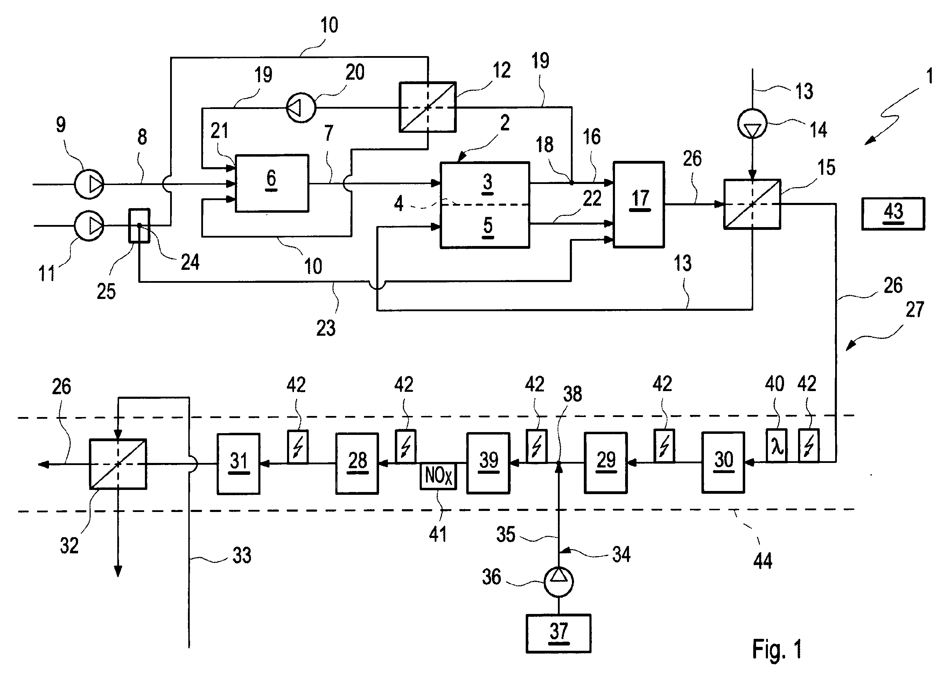

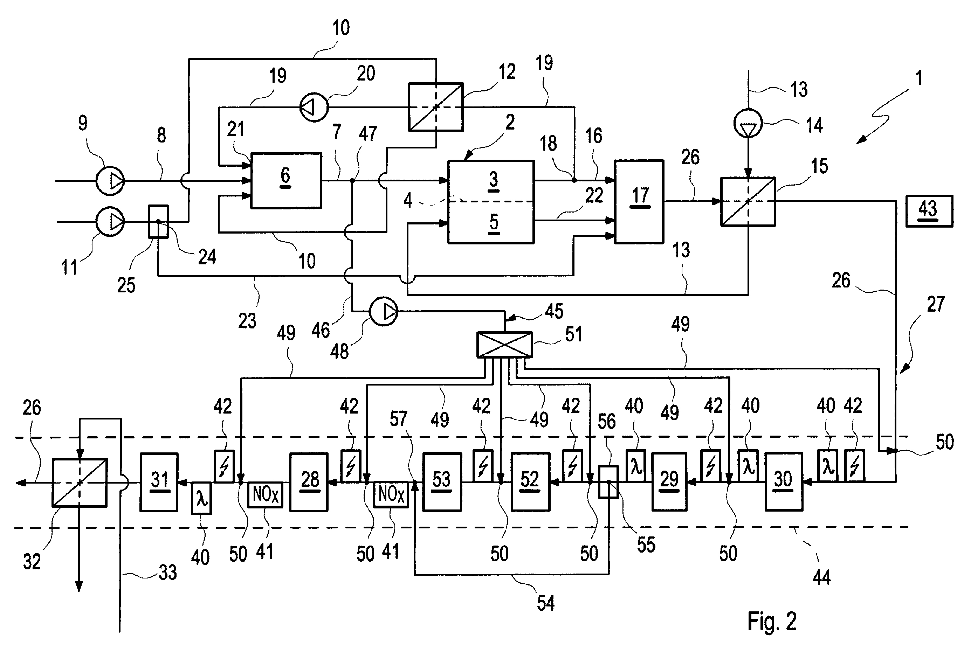

Entsprechend den Fig. 1 und 2 umfasst ein Brennstoffzellensystem 1, das in einem Kraftfahrzeug angeordnet ist, eine Brennstoffzelle 2, mit deren Hilfe elektrischer Strom aus einem Anodengas und einem Kathodengas generiert werden kann. Die Brennstoffzelle 2 weist hierzu eine Anodenseite 3 auf, die über ein Elektrolyt 4 von einer Kathodenseite 5 getrennt ist. Die Brennstoffzelle 2 besteht üblicherweise aus einem Stapel einzelner Brennstoffzellenelemente, bei denen jeweils die Anodenseite 3 über einen Elektrolyt 4 von der Kathodenseite 5 getrennt ist. Die Brennstoffzelle 2 kann als Hochtemperatur-Brennstoffzelle oder als Festkörper-Brennstoffzelle, insbesondere als SOFC-Brennstoffzelle ausgestaltet sein. Ebenso kann die Brennstoffzelle 2 als Niedertemperatur-Brennstoffzelle, vorzugsweise als PEM-Brennstoffzelle, ausgestaltet sein. Eine PEM-Brennstoffzelle arbeitet mit einer Protonen-Transport-Membran oder mit einer Polymer-Elektrolyt-Membran als Elektrolyt 4. Sofern es sich um eine PEM-Brennstoffzelle handelt, ist der Reformer 6 zweckmäßig mit einer CO-Gasreinigungseinrichtung ausgestattet, um den Kohlenmonoxidgehalt im Reformatgas zu Gunsten der PEM-Brennstoffzelle zu reduzieren. Die gezeigten Ausführungsformen eignen sich bevorzugt für SOFC-Brennstoffzellen.

Das Brennstoffzellensystem 1 weist außerdem einen Reformer 6 auf, der dazu dient, aus einem Kraftstoff und einem Oxidator ein Reformatgas zu generieren, das der Brennstoffzelle 2 als Anodengas zuführbar ist. Das Reformatgas enthält Wasserstoffgas und kann auch als Synthesegas oder Syngas bezeichnet werden. Der Reformer 6 führt das Anodengas über eine Anodengasleitung 7 der Anodenseite 3 der Brennstoffzelle 2 zu. Der Reformer 6 wird seinerseits über eine Kraftstoffleitung 8, in der eine Fördereinrichtung 9, zum Beispiel eine Pumpe, angeordnet ist, mit Kraftstoff versorgt. Beim Kraftstoff kann es sich um einen grundsätzlich beliebigen Kohlenwasserstoff handeln. Vorzugsweise handelt es sich dabei um einen flüssigen Kraftstoff. Sofern das Brennstoffzellensystem 1 in einem Kraftfahrzeug angeordnet ist, wird als Kraftstoff der gleiche Kraftstoff, z.B. Diesel, Benzin oder Biokraftstoff, verwendet, der auch einer Brennkraftmaschine des Fahrzeugs zugeführt wird. Dem Reformer 6 wird über eine Oxidatorleitung 10 ein geeigneter Oxidator, vorzugsweise Luft, zugeführt. Die Oxidatorleitung 10 enthält hierzu eine Fördereinrichtung 11, zum Beispiel ein Gebläse. In den gezeigten Beispielen ist die Oxidatorleitung 10 über einen Wärmeübertrager 12 geführt, der im Folgenden auch als erster Wärmeübertrager 12 bezeichnet wird. Hierdurch kann der dem Reformer 6 zugeführte Oxidator vorgewärmt werden.

Die Brennstoffzelle 2 ist eingangsseitig an eine Kathodengasleitung 13 angeschlossen, über die der Kathodenseite 5 Kathodengas, vorzugsweise Luft, zugeführt wird. Die Kathodengasleitung 13 enthält eine Fördereinrichtung 14, zum Beispiel ein Gebläse, und ist durch einen Wärmeübertrager 15 geführt, der im Folgenden auch als zweiter Wärmeübertrager 15 bezeichnet wird. Über den zweiten Wärmeübertrager 15 kann das Kathodengas vorgewärmt werden. Die Brennstoffzelle 2 weist ausgangsseitig an ihrer Anodenseite 3 eine Anodenabgasleitung 16 auf, über die Anodenabgas einem Restgasbrenner 17 zuführbar ist. An der Anodenabgasleitung 16 zweigt bei 18 eine Rückführleitung 19 ab, die durch den ersten Wärmeübertrager 12 geführt ist, die eine Fördereinrichtung 20, bei der es sich beispielsweise um einen Kompressor, einen Verdichter, eine Pumpe oder ein Gebläse handelt, enthält und die ebenfalls eingangsseitig an den Reformer 6 angeschlossen ist. Im gezeigten Beispiel ist die Rückführleitung 19 über eine Einleitstelle 21 an den Reformer 6 angeschlossen. A-lertnativ kann diese Einleitstelle 21 auch an der Oxidatorleitung 10, nach dem ersten Wärmeübertrager 12 angeordnet sein. Ferner verlässt die Kathodenseite 5 Kathodenabgas durch eine Kathodenabgasleitung 22, die ebenfalls die Brennstoffzelle 2 mit dem Restgasbrenner 17 verbindet. Dem Restgasbrenner 17 kann außerdem optional Kühlgas zugeführt werden, und zwar durch eine Kühlgasleitung 23, die beispielsweise von der Oxidatorleitung 10 abzweigt. Die entsprechende Abzweigstelle ist hier mit 24 bezeichnet und kann mit einer entsprechenden Ventileinrichtung 25 gesteuert werden.

Der Restgasbrenner 17 kann mit offener Flamme arbeiten und das wasserstoffhaltige Anodenabgas mit dem sauerenstoffhaltigen Kathodenabgas und gegebenenfalls mit dem Kühlgas, bei dem es sich ebenfalls um Luft handeln kann, verbrennen. Alternativ kann es sich beim Restgasbrenner 17 auch um einen katalytischen Brenner handeln. Die Verbrennungsabgase des Brenners 17 verlassen den Brenner 17 über eine Abgasleitung 26, die ebenfalls durch den zweiten Wärmeübertrager 15 hindurchgeführt ist, wodurch die Brennerabgase gekühlt werden.

Im gezeigten Beispiel bilden die Brennstoffzelle 2, der Restgasbrenner 17 und der zweite Wärmeübertrager 15 jeweils separate Bauteile. Bei bevorzugten Ausführungsformen können zumindest zwei dieser Komponenten eine integrale Einheit bilden. Beispielsweise kann der Restgasbrenner 17 in eine Ausgangsseite der Brennstoffzelle 2 baulich integriert sein. Zusätzlich oder alternativ kann der zweite Wärmeübertrager 15 baulich in eine Ausgangsseite des Restgasbrenners 17 integriert sein.

Das Brennstoffzellensystem 1 umfasst eine Abgasanlage 27, mit deren Hilfe die Abgase der Brennstoffzelle 2 behandelt werden können beziehungsweise einer Nachbehandlung unterzogen werden können. Ein wichtiger Bestandteil der Abgasanlage 27 ist die Abgasleitung 26. Im Beispiel umfasst die Abgasanlage 27 den Restgasbrenner 17, mit dem Wasserstoffgasreste des Anodenabgases umgesetzt werden. Ferner enthält die Abgasanlage 27 den zweiten Wärmeübertrager 15.

Entsprechend den Fig. 1 und 2 umfasst die Abgasanlage 27 außerdem einen SCR-Katalysator 28, der mit Hilfe von Ammoniak Stickoxide zu Stickstoff und Wasser umsetzen kann. Die Abgasanlage 27 kann des weiteren ein Partikelfilter 29 enthalten, das im Abgas mitgeführte Partikel, wie zum Beispiel Ruß, aus dem Abgas des Brennstoffzellensystems 1 herausfiltern kann. Das Partikelfilter 29 ist dabei zweckmäßig stromauf des SCR-Katalysators 28 angeordnet. Stromauf des Partikelfilters 29 kann ein Oxidationskatalysator 30 angeordnet sein, der im Folgenden auch als erster Oxidationskatalysator 30 bezeichnet wird. Der erste Oxidationskatalysator 30 ist dabei stromab des zweiten Wärmeübertragers 15 in der Abgasleitung 26 angeordnet. In den gezeigten Beispielen ist außerdem stromab des SCR-Katalysators 28 ein Oxidationskatalysator 31 angeordnet, der im Folgenden auch als zweiter Oxidationskatalysator 31 bezeichnet wird. Stromab dieses zweiten Oxidationskatalysators 31 beziehungsweise stromab des SCR-Katalysators 28 kann ein Wärmeübertrager 32 in der Abgasleitung 26 angeordnet sein. Dieser Wärmeübertrager 32 kann im Folgenden auch als dritter Wärmeübertrager 32 bezeichnet werden. Der dritte Wärmeübertrager 32 ermöglicht eine wärmeübertragende Kopplung zwischen der Abgasleitung 26 beziehungsweise dem darin geführten Abgas und einer Leitung 33 beziehungsweise einem darin geführten Wärmeübertragungsmedium. Die Leitung 33 kann in einen Kühlkreis einer Brennkraftmaschine eines mit dem Brennstoffzellensystem 1 ausgestatteten Kraftfahrzeugs eingebunden sein. Ebenso kann diese Leitung 33 in eine Heizeinrichtung des mit dem Brennstoffzellensystem 1 ausgestatteten Fahrzeugs eingebunden sein. Jedenfalls kann über die Leitung 33 die im Abgas enthaltene Restwärme genutzt werden.

Bei der in Fig. 1 gezeigten Ausführungsform ist die Abgasanlage 27 zusätzlich mit einer Einspritzeinrichtung 34 ausgestattet, mit deren Hilfe Ammoniak oder Harnstoff oder eine wässrige Harnstofflösung in die Abgasleitung 26 eingebracht werden kann. Die Einspritzeinrichtung 34 umfasst hierzu eine Einspritzleitung 35, die eine Einspritzpumpe 36 enthält und die eingangsseitig an ein Reservoir 37 und ausgangsseitig über eine Einleitstelle 38 an die Abgasleitung 26 angeschlossen ist. Im Reservoir 37 ist das jeweilige Reduktionsmittel, also Ammoniak oder Harnstoff oder die wässrige Harnstofflösung bevorratet. Die Einleitstelle 38 ist jedenfalls stromauf des SCR-Katalysators 28 angeordnet. Im gezeigten Beispiel ist die Abgasanlage 27 außerdem mit einem Hydrolysekatalysator 39 ausgestattet, der stromauf des SCR-Katalysators 28 in der Abgasleitung 26 angeordnet ist. Die Einleitstelle 38 ist dann stromauf des Hydrolysekatalysators 39 angeordnet. Im Hydrolysekatalysator 39 kann Harnstoff beziehungsweise wässrige Harnstofflösung in Ammoniak umgesetzt werden.

Bei der in Fig. 1 gezeigten Ausführungsform ist stromauf des ersten Oxidationskatalysators 30 eine Lambdasonde 40 angeordnet, mit deren Hilfe der Sauerstoffanteil im Abgas ermittelt werden kann. Stromauf des SCR-Katalysators 28 kann eine NOₓ-Sonde 41 angeordnet sein, um den Stickoxid-Gehalt im Abgas zu erfassen. Im Beispiel sind mehrere Zündeinrichtungen 42 dargestellt, die alternativ oder kumulativ oder in beliebiger Kombination vorhanden sein können. Mit Hilfe einer derartigen Zündeinrichtung 42, bei der es sich beispielsweise um eine Zündkerze oder um einen Glühstift oder dergleichen handeln kann, kann ein im Abgas bereitgestelltes zündfähiges Gemisch zur Zündung gebracht werden. Beispielsweise kann mit Hilfe einer entsprechenden, hier nur durch ein Rechtecksymbol angedeutete Steuerung 43 das Brennstoffzellensystem 1 so betrieben werden, dass zur Erzeugung eines zündfähigen Gemischs im Abgasstrang 27 der Restgasbrenner 17 vorübergehend ausgeschaltet oder erst verspätet eingeschaltet wird. In der Folge kann wasserstoffhaltiges Anodenabgas zusammen mit sauerstoffhaltigem Kathodenabgas das in der Abgasleitung 26 strömende Abgasgemisch bilden, das am ersten Oxidationskatalysator 30 gezündet werden kann, beispielsweise um das Partikelfilter 29 so weit aufzuheizen, dass die darin eingelagerten Partikel selbsttätig abbrennen. Ebenso kann durch eine Entzündung des Gemischs beispielsweise der SCR-Katalysator 28 regeneriert oder aufgeheizt werden.

Besonders vorteilhaft ist eine Ausführungsform, bei der der SCR-Katalysator 28 zusammen mit wenigstens einer weiteren Abgasbehandlungskomponente in einem gemeinsamen Rohr 44 angeordnet ist, das hier lediglich durch eine unterbrochene Linie angedeutet ist. In diesem Rohr 44 können die einzelnen Behandlungskomponenten, wie erster Oxidationskatalysator 30, Partikelfilter 29, Hydrolysekatalysator 39, SCR-Katalysator 28, zweiter Oxidationskatalysator 31 und hier auch der dritte Wärmeübertrager 32 axial hintereinander angeordnet sein. Das Rohr 44 dient dabei einerseits zur Halterung der einzelnen Komponenten und andererseits zur Gasführung zwischen den Komponenten.

Die in Fig. 2 gezeigte Ausführungsform kommt ohne externe Hilfsstoffe wie Ammoniak oder Harnstoff oder wässrige Harnstofflösung aus, die in separaten Behältern oder Reservoirs 37 zu bevorraten sind. Bei der in Fig. 2 gezeigten Ausführungsform ist das Brennstoffzellensystem 1 mit einer Reformateinleiteinrichtung 45 ausgestattet. Diese umfasst eine Reformatleitung 46, die bei 47 von der Anodengasleitung 7 abzweigt, insbesondere eine Fördereinrichtung 48 enthält, zum Beispiel ein Gebläse, eine Pumpe, einen Kompressor oder einen Verdichter, und die über wenigstens einen Reformatleitungszweig 49 an die Abgasleitung 26 angeschlossen ist. Je nach den vorherrschenden Druckverhältnissen kann auf die Fördereinrichtung 48 auch verzichtet werden. Ebenso kann der Fördereinrichtung 48 ein Speicher nachgeschaltet werden. Im gezeigten Beispiel sind ohne Beschränkung der Allgemeinheit, rein exemplarisch sechs Reformatleitungszweige 49 dargestellt, die jeweils über eine Einleitstelle 50 an die Abgasleitung 26 angeschlossen sind. Zur Aufteilung und Verteilung des über die Reformatleitung 46 von der Anodengasleitung 7 abgezweigten Reformatstroms auf die einzelnen Reformatleitungszweige 49 ist hier eine Ventilanordnung 51 vorgesehen.

Die Abgasanlage 27 enthält hier keinen Hydrolysekatalysator 39, sondern einen NOₓ-Speicher 52, bei dem es sich insbesondere um einen Denox-Katalysator handeln kann. Der NOₓ-Speicher 52 ist dabei stromauf des SCR-Katalysators 28 in der Abgasanlage 27 angeordnet und befindet sich zweckmäßig stromab des Partikelfilters 29. Des weiteren ist hier zwischen dem NOₓ-Speicher 52 und dem SCR-Katalysator 28 ein Oxidationskatalysator 53 in der Abgasanlage 27 vorgesehen, der im Folgenden auch als dritter Oxidationskatalysator 53 bezeichnet wird. Beim dritten Oxidationskatalysator 53 kann es sich insbesondere um einen Drei-Wege-Katalysator handeln. Des weiteren ist die Abgasanlage 27 hier mit einem Bypass 54 ausgestattet, der zumindest den NOₓ-Speicher 52 umgeht. Im gezeigten Beispiel umgeht der Bypass 54 zusätzlich auch den dritten Oxidationskatalysator 53. Eine Abzweigstelle des Bypass 54 ist mit 55 bezeichnet und befindet sich stromauf der dem NOₓ-Speicher 52 zugeordneten Einleitstelle 50. Der Bypass 54 tritt bei einer mit 57 bezeichneten Einleitstelle wieder in die Abgasleitung 26 ein, wobei diese Einleitstelle 57 stromauf des SCR-Katalysators 28 angeordnet ist. Eine Ventileinrichtung 56 ermöglicht eine Steuerung des Bypasses 54. Insbesondere kann diese Ventileinrichtung 56 den Bypass 54 einschalten beziehungsweise aktivieren, so dass das Abgas im wesentlichen ausschließlich durch den Bypass 54 strömt und dadurch weder den NOₓ-Speicher 52 noch den dritten Oxidationskatalysator 53 durchströmt. Die Ventileinrichtung 56 kann auch so geschaltet werden, dass der Bypass 54 ausgeschaltet beziehungsweise deaktiviert ist, so dass das Abgas in der Folge den Bypass 54 nicht durchströmen kann, sondern ausschließlich nacheinander durch den NOₓ-Speicher 52 und den dritten Oxidationskatalysator 53 strömt.

Die Zuführung des Wasserstoffgas enthaltenden Reformatgases in die Abgasleitung 46 kann für unterschiedliche Funktionalitäten genutzt werden. Beispielsweise kann mit Hilfe des hochreaktiven Wasserstoffgases der erste Oxidationskatalysator 30 bei einem Kaltstart des Brennstoffzellensystems 1 relativ rasch auf Betriebstemperatur gebracht werden. Sofern der erste Oxidationskatalysator 30 noch zu kalt ist, um das explosive Wasserstoffgas-Luft-Gemisch entzünden zu können, kann mit Hilfe der dem ersten Oxidationskatalysator 30 zugeordneten, stromauf davon angeordneten Zündeinrichtung 42 eine Fremdzündung des Gemischs realisiert werden. Entsprechendes gilt grundsätzlich auch für den zweiten Oxidationskatalysator 31 und den dritten Oxidationskatalysator 53. Des Weiteren kann mit Hilfe des Reformatgases auch das Partikelfilter 29 so weit aufgeheizt werden, dass ein Regenerationsvorgang initiiert werden kann. Dies kann einerseits über die Umsetzung des Reformats am ersten Oxidationskatalysator 30 erfolgen. Andererseits kann auch hier durch Fremdzündung eines Gemischs am Partikelfilter 29 die nötige Aufheizung erreicht werden. Hierzu kann das Reformat über die dem Partikelfilter 29 zugeordnete Einleitstelle 50 zwischen Partikelfilter 29 und erstem Oxidationskatalysator 30 eingebracht werden.

Im normalen Betrieb des Brennstoffzellensystems 1 ist der Bypass 54 deaktiviert, und der NOₓ-Speicher 52 speichert im (überstöchiometrischen) Abgas mitgeführte Stickoxide. Stickoxide, die im NOₓ-Speicher 52 nicht gespeichert werden können, durchströmen den dritten Oxidationskatalysator 53 ungehindert und können im SCR-Katalysator 28 umgesetzt werden. Im Verlaufe des Betriebs werden der NOₓ-Speicher 52 und der SCR-Katalysator 28 mehr und mehr mit Stickoxiden gesättigt.

In einem Regenerationsbetrieb wird zunächst die dem Bypass 54 zugeordnete Ventileinrichtung 56 so betätigt, dass das Abgas nunmehr durch den Bypass 54 strömt. Gleichzeitig wird über die Reformateinleiteinrichtung 45 und die dem NOₓ-Speicher 52 zugeordnete Einleitstelle 50 Reformatgas dem NOₓ-Speicher 52 zugeführt. Hierdurch können die im NOₓ-Speicher 52 adsorbierten Stickoxide resorbiert werden, wodurch sie freigesetzt werden und aus dem NOₓ-Speicher 52 austreten. Zusätzlich kann über die dem dritten Oxidationskatalysator 53 zugeordnete Einleitstelle 50 zusätzliches Reformatgas dem Stickoxidstrom zugeführt werden. Im dritten Oxidationskatalysator 53 können nun die Stickoxide mit dem Wasserstoff des Reformats zu Ammoniak und Wasser umgesetzt werden. Das so gebildete Ammoniak kann über die Abgasleitung 26 ebenso wie der den Bypass 54 geführte Abgasstrom dem SCR-Katalysator 28 zugeführt werden. Mit dem Ammoniak kann im SCR-Katalysator die gewünschte Umsetzung der Stickoxide in Stickstoff und Wasser realisiert werden. Hierbei kann sich insbesondere Ammoniak im SCR-Katalysator einlagern. Sobald der SCR-Katalysator 28 und der NOₓ-Speicher 52 hinreichend regeneriert sind, kann der Bypass 54 wieder deaktiviert werden, so dass die Abgase wieder durch den NOₓ-Speicher 52 strömen.

## Patentansprüche

1. Kraftfahrzeug mit Brennkraftmaschine, umfassend ein Brennstoffzellensystem (1), wobei das Brennstoffzellensystem (1) eine Brennstoffzelle (2) zum Generieren von elektrischem Strom aus Anodengas und Kathodengas sowie einen Reformer (6) zum Generieren von der Brennstoffzelle (2) als Anodengas zuführbarem Reformatgas aus Kraftstoff und Oxidator aufweist, wobei das Brennstoffzellensystem (1) eine von einer Abgasanlage der Brennkraftmaschine unabhängige, eigene Abgasanlage (27) zur Nachbehandlung der Abgase der Brennstoffzelle (2) aufweist, die einen SCR-Katalysator (28) zur Umsetzung von NOₓ mit Ammoniak aufweist.

2. Kraftfahrzeug nach Anspruch 1,
**dadurch gekennzeichnet,**
**dass** die Abgasanlage (27) eine Einspritzeinrichtung (34) zum Einbringen von Ammoniak oder von Harnstoff oder einer wässrigen Harnstofflösung aufweist.

3. Kraftfahrzeug nach Anspruch 1 oder 2,
**dadurch gekennzeichnet,**
**dass** die Abgasanlage (27) stromauf des SCR-Katalysators (28) einen Hydrolysekatalysator (39) zur Umsetzung von Harnstoff oder wässriger Harnstofflösung in Ammoniak aufweist.

4. Kraftfahrzeug nach einem der Ansprüche 1 bis 3,
**dadurch gekennzeichnet,**
**dass** die Abgasanlage (27) stromauf des SCR-Katalysators (28) ein Partikelfilter (29) und/oder einen (ersten) Oxidationskatalysator (30) aufweist, wobei stromab des SCR-Katalysators (28) ein (zweiter) Oxidationskatalysator (31) angeordnet sein kann.

5. Kraftfahrzeug nach einem der Ansprüche 1 bis 4,
**dadurch gekennzeichnet,**
**dass** die Abgasanlage (27) stromauf des SCR-Katalysators (28) einen NOₓ-Speicher (52) aufweist.

6. Kraftfahrzeug nach Anspruch 5,
**dadurch gekennzeichnet,**
**dass** die Abgasanlage (27) stromauf des SCR-Katalysators (28) und stromab des NOₓ-Speichers (52) einen (dritten) Oxidationskatalysator (53), insbesondere einen Drei-Wege-Katalysator, aufweist.

7. Kraftfahrzeug nach einem der Ansprüche 1 bis 6,
**dadurch gekennzeichnet,**
**dass** eine Reformateinleiteinrichtung (45) zum Einleiten von Reformatgas des Reformers (6) in die Abgasanlage (27) vorgesehen ist.

8. Kraftfahrzeug nach Anspruch 7,
**dadurch gekennzeichnet,**
**dass** eine dem SCR-Katalysator (28) zugeordnete Einleitstelle (50) vorgesehen ist, die stromauf des SCR-Katalysators (28) angeordnet ist.

9. Kraftfahrzeug nach Anspruch 5 oder 6 sowie nach Anspruch 7 oder 8,
**dadurch gekennzeichnet,**
- **dass** eine dem NOₓ-Speicher (52) zugeordnete Einleitstelle (50) vorgesehen ist, die stromauf des NOₓ-Speichers(52) angeordnet ist, und/oder
- **dass** eine dem (dritten) Oxidationskatalysator (53) zugeordnete Einleitstelle (50) vorgesehen ist, die stromauf des (dritten) Oxidationskatalysators (53) angeordnet ist.

10. Kraftfahrzeug nach Anspruch 9,
**dadurch gekennzeichnet,**
**dass** die Abgasanlage (27) einen den NOₓ-Speicher (52) und die zugehörige Reformatgas-Einleitstelle (50) umgehenden Bypass (54) aufweist, der mit einer Ventileinrichtung (56) ein- und ausschaltbar ist.

11. Kraftfahrzeug nach Anspruch 10,
**dadurch gekennzeichnet,**
**dass** der Bypass (54) auch den zwischen NOₓ-Speicher (52) und SCR-Katalysator (28) angeordneten (dritten) Oxidationskatalysator (53) umgeht.

12. Kraftfahrzeug, zumindest nach den Ansprüchen 4 und 7,
**dadurch gekennzeichnet,**
- **dass** eine dem Partikelfilter (29) zugeordnete Einleitstelle (50) vorgesehen ist, die stromauf des Partikelfilters (29) angeordnet ist, und/oder
- **dass** eine dem stromauf des SCR-Katalysators (28) angeordneten (ersten) Oxidationskatalysator (30) zugeordnete Einleitstelle (50) vorgesehen ist, die stromauf dieses Oxidationskatalysators (30) angeordnet ist, und/oder
- **dass** eine dem stromab des SCR-Katalysators (28) angeordneten (zweiten) Oxidationskatalysators (31) zugeordnete Einleitstelle (50) vorgesehen ist, die stromauf dieses Oxidationskatalysators (31) angeordnet ist.

13. Kraftfahrzeug nach einem der Ansprüche 7 bis 12,
**dadurch gekennzeichnet,**
**dass** die Reformateinleiteinrichtung (45) eine Reformatleitung (46) aufweist, die eingangsseitig an eine den Reformer (6) mit der Anodenseite (3) der Brennstoffzelle (2) verbindende Anodengasleitung (7) angeschlossen ist.

14. Kraftfahrzeug nach einem der Ansprüche 1 bis 13,
**dadurch gekennzeichnet,**
**dass** zumindest einer der Komponenten: SCR-Katalysator (28), Dieselpartikelfilter (29), Hydrolysekatalysator (39), stromauf liegender (erster) Oxidationskatalysator (30), stromab liegender (zweiter) Oxidationskatalysator (31), NOₓ-Speicher (52), zwischen NOₓ-Speicher (52) und SCR-Katalysator (28) liegender (dritter) Oxidationskatalysator (53), eine Zündeinrichtung (42) zugeordnet ist, die stromauf der jeweiligen Komponente angeordnet ist.

15. Kraftfahrzeug nach Anspruch 14 sowie nach einem der Ansprüche 7 bis 13,
**dadurch gekennzeichnet,**
**dass** die jeweilige Zündeinrichtung (42) stromab der der jeweiligen Komponente zugeordneten Einleitstelle (50) angeordnet ist.

16. Kraftfahrzeug nach einem der Ansprüche 1 bis 15, **dadurch gekennzeichnet,**
**dass** die Abgasanlage (27) ein Rohr (44) aufweist, in dem der SCR-Katalysator (28) und zumindest eine der Komponenten:
Dieselpartikelfilter (29), Hydrolysekatalysator (39), stromauf liegender (erster) Oxidationskatalysator (30), stromab liegender (zweiter) Oxidationskatalysator (31), NOₓ-Speicher (52), zwischen NOₓ-Speicher (52) und SCR-Katalysator (28) liegender (dritter) Oxidationskatalysator (53), gemeinsam in Strömungsrichtung hintereinander angeordnet sind.

17. Kraftfahrzeug nach einem der Ansprüche 1 bis 16,
**dadurch gekennzeichnet,**
**dass** wenigstens eine NOX-Sonde (41) zum Detektieren von NOX im Abgas und/oder wenigstens eine Lambda-Sonde (40) zum Detektieren von Sauerstoff im Abgas vorgesehen ist, die an oder in der Abgasleitung (26) des Brennstoffzellensystems (1) angeordnet ist, wobei insbesondere vorgesehen sein kann, die Signale der jeweiligen Sonde (40, 41) in zumindest einer Steuerung (43) für Regenerationsvorgänge zu berücksichtigen.

## Claims

1. A motor vehicle with combustion engine, comprising a fuel cell system (1), wherein the fuel cell system (1) comprises a fuel cell (2) for generating electric current from anode gas and cathode gas as well as a reformer (6) for generating reformate gas from fuel and oxidant that can be supplied by the fuel cell (2) as anode gas, wherein the fuel cell system (1) has an own exhaust system (27) independent of an exhaust system of the combustion engine for re-treating the exhaust gases of the fuel cell (2), which comprises an SCR-catalytic converter (28) for converting NOₓ with ammonia.

2. The motor vehicle according to Claim 1, **characterized in that** the exhaust system (27) comprises an injection device (34) for feeding ammonia or urea or an aqueous urea solution.

3. The motor vehicle according to Claim 1 or 2, **characterized in that** the exhaust system (27) upstream of the SCR-catalytic converter (28) comprises a hydrolysis catalytic converter (39) for converting urea or aqueous urea solution into ammonia.

4. The motor vehicle according to Claims 1 to 3, **characterized in that** the exhaust system (27) upstream of the SCR-catalytic converter (28) comprises a particle filter (29) and/or a (first) oxidation catalytic converter (30), wherein downstream of the SCR-catalytic converter (28) a (second) oxidation catalytic converter (31) can be arranged.

5. The motor vehicle according to any one of the Claims 1 to 4, **characterized in that** the exhaust system (27) upstream of the SCR-catalytic converter (28) comprises an NOx-storage device (52).

6. The motor vehicle according to Claim 5, **characterized in that** the exhaust system (27) upstream of the SCR-catalytic converter (28) and downstream of the NOx storage device (52) comprises a (third) oxidation catalytic converter (53), particularly a three-way catalytic converter.

7. The motor vehicle according to any one of the Claims 1 to 6, **characterized in that** a reformate feeding device (45) for feeding reformate gas of the reformer (6) into the exhaust system (27) is provided.

8. The motor vehicle according to Claim 7, **characterized in that** a feeding point (50) assigned to the SCR-catalytic converter (28) is provided, which is arranged upstream of the SCR-catalytic converter (28).

9. The motor vehicle according to Claim 5 or 6 and according to Claim 7 or 8, **characterized**
- **in that** a feeding point (50) assigned to the NOx-storage device (52) is provided, which is arranged upstream of the NOx-storage device (52), and/or
- **in that** a feeding point (50) assigned to the (third) oxidation catalytic converter (53) is provided, which is arranged upstream of the (third) oxidation catalytic converter (53).

10. The motor vehicle according to Claim 9, **characterized in that** the exhaust system (27) comprises a bypass (54) bypassing the NOx-storage unit (52) and the associated reformate gas feeding point (50), which can be switched on and off with a valve device (56).

11. The motor vehicle according to Claim 10, **characterized in that** the bypass (54) also bypasses the (third) oxidation catalytic converter (53) arranged between an NOx-storage unit (52) and SCR-catalytic converter (28).

12. The motor vehicle at least according to the Claims 4 and 7, **characterized**
- **in that** a feeding point (50) assigned to the particle filter (29) is provided, which is arranged upstream of the particle filter (29), and/or
- **in that** a feeding point (50) assigned to the (first) oxidation catalytic converter (30) arranged upstream of the SCR-catalytic converter (28) is provided, which is arranged upstream of this oxidation catalytic converter (30), and/or
- **in that** a feeding point (50) assigned to the (second) oxidation catalytic converter (31) arranged upstream of the SCR-catalytic converter (28) is provided, which is arranged upstream of this oxidation catalytic converter (31).

13. The motor vehicle according to any one of the Claims 7 to 12, **characterized in that** the reformate feeding device (45) comprises a reformate line (46) which on the input side is connected to an anode gas line (7) connecting the reformer (6) to the anode side (3) of the fuel cell (7).

14. The motor vehicle according to any one of the Claims 1 to 13, **characterized in that** at least one of the components: SCR-catalytic converter (28), diesel particle filter (29), hydrolysis catalytic converter (39), (first) oxidation catalytic converter (30) located upstream, (second) oxidation catalytic converter (31) located downstream, NOx-storage unit (52), (third) oxidation catalytic converter (53) located between NOx-storage unit (52) and SCR-catalytic converter (28) is assigned an ignition device (42) which is arranged upstream of the respective component.

15. The motor vehicle according to Claim 14 and according to any one of the Claims 7 to 13, **characterized in that** the respective ignition device (42) is arranged downstream of the feeding point (50) assigned to the respective component.

16. The motor vehicle according to any one of the Claims 1 to 15, **characterized in that** the exhaust system (27) comprises a pipe (44), in which the SCR-catalytic converter (28) and at least one of the components: diesel particle filter (29), hydrolysis catalytic converter (39), (first) oxidation catalytic converter (30) located upstream, (second) oxidation catalytic converter (31) located downstream, NOx-storage unit (52), (third) oxidation catalytic converter (53) located between NOx-storage unit (52) and SCR-catalytic converter (28) are jointly arranged in flow direction one after the other.

17. The motor vehicle according to any one of the Claims 1 to 16, **characterized in that** at least one NOx-probe (41) for detecting NOx in the exhaust gas and/or at least one lampda probe (40) for detecting oxygen in the exhaust gas is provided, which is arranged on or in the exhaust line (26) of the fuel cell system (1), wherein it can be more preferably provided to take into account the signals of the respective probe (40, 41) in at least one control (43) for regeneration operations.

## Revendications

1. Véhicule automobile avec moteur à combustion interne, comprenant un système de cellule de combustible (1), le système de cellule combustible (1) présentant une cellule de combustible (2) pour générer du courant électrique à partir de gaz d'anode et de gaz de cathode ainsi qu'un reformeur (6) pour générer du gaz reformat pouvant être amené à la cellule de combustible (2) sous forme de gaz d'anode à partir de carburant et d'oxydant, le système de cellule de combustible (1) présentant une installation d'échappement (27) propre, indépendante d'une installation d'échappement du moteur à combustion interne, pour le retraitement des gaz brûlés de la cellule de combustible (2), qui présente un catalyseur SCR (28) pour la transformation de NOₓ avec de l'ammoniac.

2. Véhicule automobile selon la revendication 1,
**caractérisé en ce que**
l'installation d'échappement (27) présente un dispositif d'injection (34) pour l'introduction d'ammoniac ou d'urée ou d'une solution d'urée aqueuse.

3. Véhicule automobile selon la revendication 1 ou 2,
**caractérisé en ce que**
l'installation d'échappement (27) présente en amont du catalyseur SCR (28) un catalyseur à hydrolyse (39) pour la transformation d'urée ou de solution d'urée aqueuse en ammoniac.

4. Véhicule automobile selon l'une des revendications 1 à 3,
**caractérisé en ce que**
l'installation d'échappement (27) présente en amont du catalyseur SCR (28) un filtre à particules (29) et/ou un (premier) catalyseur à oxydation (30), un (second) catalyseur à oxydation (31) pouvant être disposé en aval du catalyseur SCR (28).

5. Véhicule automobile selon l'une des revendications 1 à 4,
**caractérisé en ce que**
l'installation d'échappement (27) présente un accumulateur au NOₓ (52) en amont du catalyseur SCR (28).

6. Véhicule automobile selon la revendication 5,
**caractérisé en ce que**
l'installation d'échappement (27) présente en amont du catalyseur SCR (28) et en aval de l'accumulateur au NOₓ (52) un (troisième) catalyseur à oxydation (53), en particulier un catalyseur à trois voies.

7. Véhicule automobile selon l'une des revendications 1 à 6,
**caractérisé en ce**
**qu'**un dispositif d'introduction de reformat (45) est prévu pour l'introduction de gaz reformat du reformeur (6) dans l'installation d'échappement (27).

8. Véhicule automobile selon la revendication 7,
**caractérisé en ce**
**qu'**il est prévu un point d'introduction (50) attribué au catalyseur SCR (28), qui est disposé en amont du catalyseur SCR (28).

9. Véhicule automobile selon la revendication 5 ou 6 et selon la revendication 7 ou 8,
**caractérisé en ce**
- **qu'**il est prévu un point d'introduction (50) attribué à l'accumulateur au NOₓ (52), qui est disposé en amont de l'accumulateur au NOₓ (52), et/ou
- en ce qu'il est prévu un point d'introduction (50) attribué au (troisième) catalyseur à oxydation (53), qui est disposé en amont du (troisième) catalyseur à oxydation (53).

10. Véhicule automobile selon la revendication 9,
**caractérisé en ce que**
l'installation d'échappement (27) présente une dérivation (54) qui contourne l'accumulateur au NOₓ (52) et le point d'introduction spécifique du gaz reformat (50), laquelle dérivation peut être connectée et déconnectée avec un dispositif de vanne (56).

11. Véhicule automobile selon la revendication 10,
**caractérisé en ce que**
la dérivation (54) contourne également le (troisième) catalyseur à oxydation (53) disposé entre l'accumulateur au NOₓ (52) et le catalyseur SCR (28).

12. Véhicule automobile, au moins selon les revendications 4 et 7,
**caractérisé en ce que**
- qu'il est prévu un point d'introduction (50) attribué au filtre à particules (29), qui est disposé en amont du filtre à particules (29), et/ou
- **en ce qu'**il est prévu un point d'introduction (50) attribué au (premier) catalyseur à oxydation (30) disposé en amont du catalyseur SCR (28), lequel point est disposé en amont de ce catalyseur à oxydation (30), et/ou
- il est prévu un point d'introduction (50) attribué au (second) catalyseur à oxydation (31) disposé en aval du catalyseur SCR (28), lequel point est disposé en amont de ce catalyseur à oxydation (31).

13. Véhicule automobile selon l'une des revendications 7 à 12,
**caractérisé en ce que**
le dispositif d'introduction de reformat (45) présente une conduite de reformat (46), qui est raccordée côté entrée à une conduite de gaz d'anode (7) reliant le reformeur (6) au côté anode (3) de la cellule de combustible (2).

14. Véhicule automobile selon l'une des revendications 1 à 13,
**caractérisé en ce**
**qu'**au moins à l'un des composants suivants:
catalyseur SCR (28), filtre à particules diesel (29), catalyseur à hydrolyse (39), (premier) catalyseur à oxydation (30) situé en amont, (second) catalyseur à oxydation (31) situé en aval, accumulateur au NOₓ (52), (troisième) catalyseur à oxydation (53) disposé entre l'accumulateur au NOₓ (52) et le catalyseur SCR (28), est attribué un dispositif d'allumage (42) qui est disposé en amont du composant respectif.

15. Véhicule automobile selon la revendication 14 et selon l'une des revendications 7 à 13,
**caractérisé en ce que**
le dispositif d'allumage (42) respectif est disposé en aval du point d'introduction (50) attribué au composant respectif.

16. Véhicule automobile selon l'une des revendications 1 à 15,
**caractérisé en ce que**
l'installation d'échappement (27) présente un tuyau (44), dans lequel le catalyseur SCR (28) et au moins l'un des composants suivants: filtre à particules diesel (29), catalyseur à hydrolyse (39), (premier) catalyseur à oxydation (30) situé en amont, (second) catalyseur à oxydation (31) situé en aval, accumulateur au NOₓ (52), (troisième) catalyseur à oxydation (53) situé entre l'accumulateur au NOₓ (52) et le catalyseur SCR (28), sont disposés conjointement dans le sens d'écoulement les uns derrière les autres.

17. Véhicule automobile selon l'une des revendications 1 à 16,
**caractérisé en ce**
**qu'**au moins une sonde de NOX (41) est prévue pour la détection de NOX dans les gaz d'échappement et/ou au moins une sonde lambda (40) pour la détection d'oxygène dans les gaz d'échappement, laquelle sonde est disposée sur ou dans la conduite d'échappement (26) du système de cellule de combustible (1), sachant qu'on peut prévoir en particulier de prendre en compte les signaux de la sonde (40, 41) respective dans au moins une commande (43) pour des opérations de régénération.
